# EUROPEAN PATENT SPECIFICATION

(11) **EP 0 725 740 B1**
(45) Date of publication and mention of the grant of the patent: **15.04.1998**
(21) Application number: 94931723.4
(22) Date of filing: 26.10.1994
(51) Int. Cl.: B60N 2/42

(54) **A VEHICLE SEAT**
FAHRZEUGSITZ
SIEGE DE VEHICULE

(30) Priority: 26.10.1993 GB 9322073
(43) Date of publication of application: 14.08.1996
(73) Proprietor: AUTOLIV DEVELOPMENT AB, S-447 83 Vargarda (SE)
(72) Inventor: ALDMAN, Bertil, S-417 57 Göteborg (SE)
(74) Representative: Frankland, Nigel Howard
(86) International application number: SE9401002
(87) International publication number: WO9511818

(56) References cited:
- EP-A- 0 556 884
- DE-A- 2 820 564
- GB-A- 1 391 644

## Description

The present invention relates to a vehicle seat and more particularly a vehicle seat intended for use in a motor vehicle such as a motor car.

When a motor vehicle is involved in an accident, and in particular when a motor vehicle is involved in an accident involving an impact from the rear of the vehicle, there is a risk of a person travelling in the vehicle receiving a neck injury or so-called "whiplash" injury.

The number of people suffering from neck injury has, in recent years, reduced due, it is believed, to the provision of head restraints. There is a statistic that shows that the provision of a head restraint decreases the risk of neck injury by about 20 percent on average.

However, there are still a significant number of injuries of this type that occur, and in many cases these injuries lead to permanent disability.

EP-A-0 556 884 (corresponding to the preamble of claim 1) discloses a seat assembly which has a cushion or squab unit and a back-rest unit. The back-rest unit moves rearwardly relative to the seat cushion unit when subjected to a severe loading by the occupant during a rear collision in a pivotal manner. The back-rest unit incorporates a portion which comprises a head-rest. The head-rest is fixed in position relative to the rest of the back of the seat.

GB-A-1 391 644 discloses a vehicle safety seat which has a squab or cushion portion and a back portion which is fixed to the seat portion. The seat portion is mounted on rails and is adapted to effect a sliding movement along the rails after deformable means have been deformed when a rear impact occurs. In the sequence of events illustrated in the specification the lower part of the torso of an occupant of the seat moves rearwardly relative to the back of the seat, causing the head-rest to move forwardly.

According to this invention there is provided a seat for use in a vehicle, the seat having a back comprising a support element located to support the back of the torso of an occupant of the seat, the support element being pivotally connected to the rest of the seat so that the upper part of the support element may pivot rearwardly, the seat incorporating a head rest, the head rest being mounted on the support element, characterised in that means are provided to sense a rear impact on a vehicle and then to permit at least the upper part of the said support element to move in a yielding and subsequently non-resilient manner in a direction rearwardly of the seat and means are provided to move the head rest forwardly relative to the support element as the upper part of the support element moves rearwardly.

Preferably the means to sense a rear impact comprise a sensor to sense an acceleration in excess of a predetermined limit, the sensor being adapted to release means which initially retain said support element in position.

Conveniently the support element is retained in an initial position by retaining means, retaining means being provided to retract the retaining means in response to a sensed rear impact to permit the support element to pivot rearwardly.

In one embodiment the retaining means comprise one or more bolts, spring means being provided to bias the or each bolt to a retracted position, there being an over-dead centre linkage associated with at least one inertia mass, the linkage maintaining the bolt or bolts in the unretracted position until the inertia mass moves the over-dead centre linkage through the dead-centre condition in response to a sensed rear impact.

In an alternative embodiment the or each retaining means is associated with a respective said retracting means in the form of a piston in a cylinder, means being provided to supply gas to the cylinder when a rear impact is sensed to move the piston and thus to retract the retaining means.

Preferably the means to supply gas comprise a pyrotechnic charge associated with a rear impact sensor, the arrangement being such that the pyrotechnic charge is ignited in response to a sensed rear impact.

In order that the invention may be more readily understood, and so that further features thereof may be appreciated, the invention will now be described, by way of example, with reference to the accompanying drawings, in which:
Figure 1 is a part-sectional side view of one embodiment of the invention in one condition,
Figure 2 is a corresponding view showing the embodiment of Figure 1 in another condition,
Figure 3 is an enlarged horizontal sectional view illustrating a seat, particularly illustrating the mechanism for releasing the retaining means, and
Figure 4 is a corresponding sectional view of a further modified embodiment of the invention.

The underlying concept of the invention is that the back of a seat is provided with a back support element that supports the torso of an occupant of the seat, the back support element being pivotally connected to the rest of the seat so that the upper part of the support element may pivot rearwardly. The back support element is intended to yield in a permanent or non-elastic manner when subjected to a predetermined force, or is intended to be released to yield in a non-resistant manner in response to a sensed rear impact. If such a seat is fitted in a motor vehicle, when the vehicle is subjected to a rear impact, the inertia or momentum of a person sitting in the seat will effectively apply a force to the back of the seat, and if that force exceeds the predetermined threshold, the back of the seat will yield in a non-elastic or permanent manner, or, alternatively, a sensor will sense the rear impact and will release the back support element so that it yields in a non-elastic manner. This will permit the torso of the person sitting in the seat to move backwardly. In the invention a head-rest is provided on the seat, mounted on the back of the seat. As the seat back support element moves rearwardly, so the head-rest moves forwardly relative to the seat back support element. This serves to bring the head of the person into contact with the head-rest to provide the maximum degree of protection against neck injury.

It has been found that the stiffness and elastic properties of the back rest of a conventional seat may influence the motion of a torso of a person sitting on the seat, during a rear impact. The elastic properties or resilience of the seat-back might tend to push the torso forwards (after the torso has moved backwards so as to compress those parts of the seat back that provide the resilience). The head of the person sitting in the seat may, however, still be in a process of moving backwards relative to the vehicle, since often the head is initially spaced a substantial distance in front of the head-rest. Consequently it is possible that the torso may be moving forwardly while the head is still moving backwardly, thereby giving a very high relative velocity between the head and the torso, and also providing a high extension angle between the head and the torso. In this situation there may be a high relative linear and angular velocity of the head relative to the upper torso, which may lead to significant neck injury.

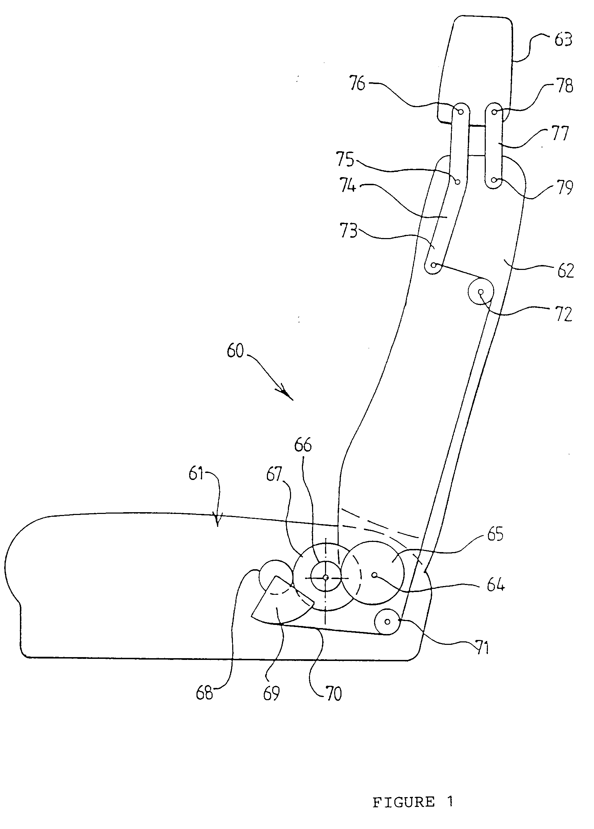

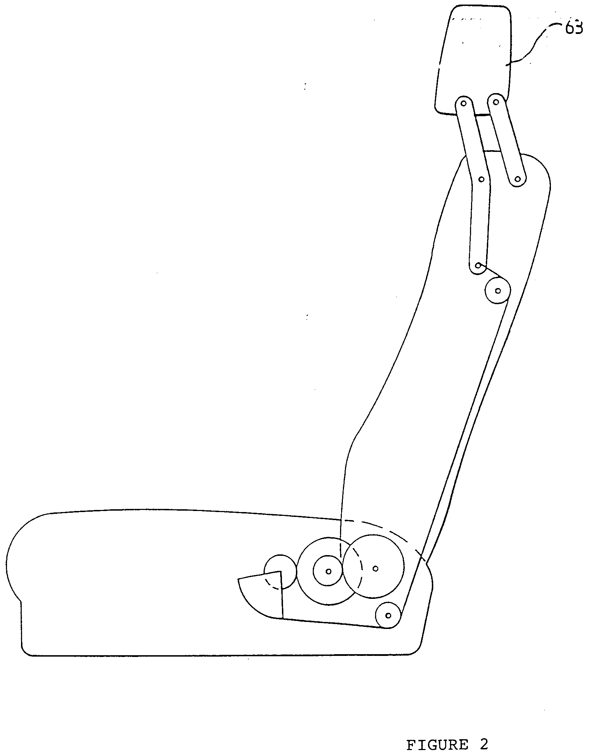

Figures 1 and 2 illustrate one embodiment of the invention. A seat 60 has a squab 61. Pivotally connected to the squab is a back 62. The back 62 forms a support element to support the torso of an occupant of the seat. Connected to the back 62 is a head-rest 63.

The back 62 is pivotally connected to the seat for pivoting movement about a pivot axis 64. A toothed wheel 65 is connected to the back to co-rotate with the back about the pivot axis 64. The toothed wheel 65 is intended to mesh with a further small toothed wheel 66 mounted on a shaft for co-rotation with a larger toothed wheel 67. The larger toothed wheel 67 drives a further relatively small toothed wheel 68 which is connected to a quadrant 69 so that rotation of the wheel 68 causes rotation of the quadrant 69 about its apex. Connected to the exterior of the quadrant 69 is a drive cable 70 which passes a guide pulley 71 adjacent the rear of the squab 61 of the seat, and then extends substantially vertically past another guide pulley 72 towards the top of the seat, the cable 70 then being connected to the lower end 73 of a lever 74 mounted for pivotal movement about a pivot axis 75 and having its upper end pivotally connected 76 to the head-rest 63. A further lever 77 is provided parallel with the upper part of the first lever 74 pivotally connected at pivot 78 to the head-rest and pivotally connected at pivot 79 to the back of the seat.

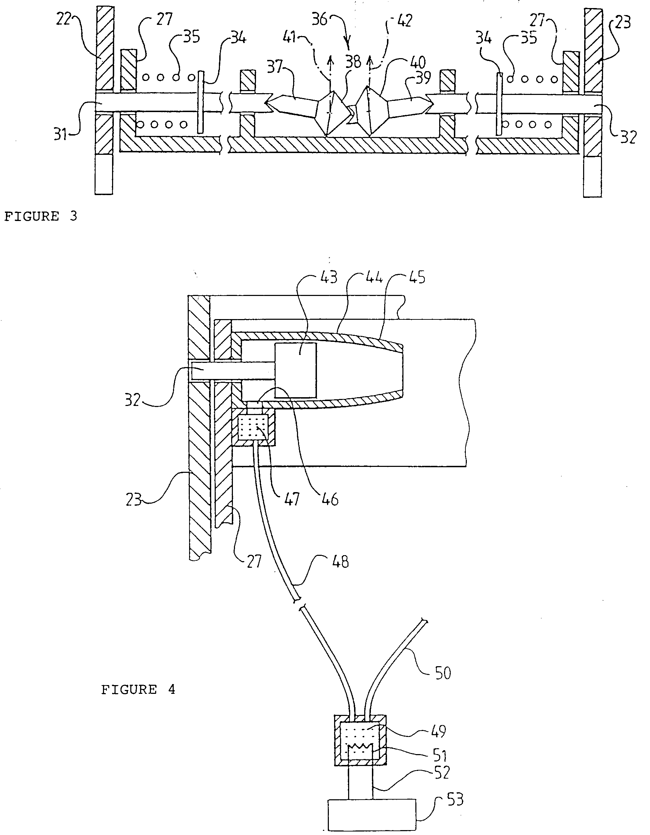

The back 62 of the seat is maintained in the initial position by appropriate retaining means of a type described in more detail below with reference to Figures 3 and 4. Thus, for example, the retaining means may comprise one or more bolts which are biassed to a retracted position, there being an over-dead centre linkage associated with at least one inertia mass which maintains the bolts in the unretracted position until the inertia mass moves the over-dead centre linkage through the dead-centre condition. Alternatively, the retaining means may be associated with a piston in a cylinder, means, such as a pyrotechnic charge associated with a rear impact sensor being provided to supply gas to the cylinder when a rear impact is sensed to move the piston and thus to retract the retaining means.

In any event, it will be appreciated that when a vehicle in which the seat illustrated in Figures 1 and 2 is mounted is subjected to a rear impact, the back 62 of the seat will move rearwardly pivotally from the position shown in dotted lines in Figure 2 to the position shown in solid lines in Figure 2. Rearward pivotal movement of the back 62 of the seat causes clockwise rotation of the toothed wheel 65 which in turn causes anti-clockwise rotation of the toothed wheel 67 which causes clockwise rotation of the toothed wheel 68 and a consequent clockwise rotation of the quadrant 69 about its apex. Tension is thus applied to the cable 70. The lower end of the lever 73 is thus moved rearwardly relative to the back of the seat. Consequently, the head-rest 63 is moved forwardly relative to the back of the seat, so that, although the back of the seat moves pivotally rearwardly, the head-rest 63 actually remains in a substantially stationary condition.

Referring to Figure 3 of the accompanying drawings, one example of the retaining means mentioned above is illustrated in greater detail. As can be seen from Figure 3, the retaining means 31, 32 each comprise an elongate bolt passing through co-aligned apertures formed in side members 27 of a frame within the back 62 of the seat and which are associated with a cross-member 28 and formed in the vertically extending side members 22, 23 which are fixed in position and which are associated with part of the back 62 of the seat.

The bolt 31 is provided with a radially extending flange 34 and a helical compression spring 35 is located between the flange and the side member 27 through which the bolt 31 passes. The compression spring 35 is in a compressed state.

Similarly, the bolt 32 is provided with a corresponding flange 34 associated with a corresponding spring 35.

Located between the inner ends of the bolts 31 and 32 is a two-piece over-dead centre linkage 36 comprising a first element 37 integrally formed with an inertia mass 38 and a second element 39 integrally formed with an inertia mass 40.

The over-dead centre linkage is shown in Figure 3 in an initial position in which the two elements 37 and 39 of the linkage are so located that the force applied to the linkage by the springs 35 presses the inertia masses 38 and 40 into contact with the cross-member 28. The arrangement is thus stable.

However, should the vehicle in which the seat is mounted be subjected to a rear impact, the inertia masses 38 and 40 will tend to move in the direction indicated by the arrows 41, 42. As the inertia masses move in this way, the linkage will pass through the dead-centre condition, initially moving the bolts 31 and 32 axially outwardly. Subsequently, however, once the elements have passed through the dead-centre condition, the force applied to the two linkage elements 37 and 39 by the springs 35 will combine with the inertia effect, causing the two linkage elements to fall away, thus permitting the bolts 31 and 32 to be moved to a retracted position under the spring bias applied to the bolts by the springs 35. Once the free ends of the bolts 31 and 32 have been withdrawn from the apertures formed in the members 22 and 23, the support element 26 and thus the back 62 of the seat may move pivotally about the pivot axis 64 generally in the manner described above with reference to Figures 1 and 2.

Turning now to Figure 4 of the drawings, which illustrates an alternative arrangement only one bolt 32 is illustrated, but it is to be appreciated that the other bolt, 31, will be of the same form. The bolt 32 passes through an aperture formed in the member 23 and through a co-aligned aperture formed in the side member 27. The bolt 32 is formed integrally with a piston head 43, the piston head being received within a cylinder 44. The cylinder 44 is formed of a malleable material, such as aluminum, and has an inwardly tapering free end 45 between the piston 43 and the substantially closed end of the cylinder, which is the end through which the bolt 32 emerges from the cylinder, the cylinder is provided with an inlet port 46 which is connected to a source of gas in the form of a pyrotechnic charge 47. The pyrotechnic charge is connected, by means of a shock tube, such as the tube sold under the Registered Trade Mark **NONEL**, 48 to an electrically triggered pyrotechnic charge 49. The charge 49 may be associated with a second shock tube 50 which is connected to an arrangement substantially identical to that described above associated with the bolt 31.

It can be seen that the pyrotechnic charge 49 is provided with an electric initiator 51 connected by means of appropriate cables 52 to a rear impact sensor 53.

It is to be appreciated that because of the tapering nature of the cylinder 44, the piston 43 is retained in the initial position as illustrated, with the bolt passing through the co-aligned apertures and retaining the support element 26 in the initial position. When the sensor 52 senses a rear impact, the pyrotechnic charge 49 is ignited, and an appropriate shock passes through the shock tube 48 to ignite the pyrotechnic charge 47. Gas thus enters the cylinder 44 through the inlet port 46 and the piston 43 is moved towards the right, as shown in the piston 43 is moved towards the right, as shown in Figure 4. This piston moves to a new position, deforming the tapering part of the cylinder 44, but withdrawing the bolt 32 from the aperture in the member 23, thus permitting the support element 26 to move pivotally, generally in the manner described above with reference to Figures 1 and 2.

## Claims

1. A seat (60) for use in a vehicle, the seat having a back comprising a support element (62) located to support the back of the torso of an occupant of the seat, the support element being pivotally connected (64) to the rest (61) of the seat so that the upper part of the support element may pivot rearwardly, the seat incorporating a head rest (63), the head rest being mounted on the support element, characterised in that means (40, 41; 53) are provided to sense a rear impact on a vehicle and then to permit at least the upper part of the said support element (62) to move in a yielding and subsequently non-resilient manner in a direction rearwardly of the seat and means (65-78) are provided to move the head rest (63) forwardly relative to the support element (62) as the upper part of the support element moves rearwardly.

2. A seat according to Claim 1, wherein the means to sense a rear impact comprise a sensor (53) to sense an acceleration in excess of a predetermined limit, the sensor being adapted to release means (32) which initially retain said support element (62) in position.

3. A seat according to Claim 1 or 2 wherein the support element (62) is retained in an initial position by retaining means (31, 32) retracting means (40, 41; 43, 44) being provided to retract the retaining means in response to a sensed rear impact to permit the support element (62) to pivot rearwardly.

4. A seat according to Claim 3 wherein the retaining means comprise one or more bolts (31, 32), spring means (35) being provided to bias the or each bolt to a retracted position, there being an over-dead centre linkage (37, 39) associated with at leat one inertia mass (38, 40), the linkage maintaining the bolt or bolts in the unretracted position until the inertia mass moves the over-dead centre linkage through the dead-centre condition in response to a sensed rear impact.

5. A seat according to Claim 3 wherein the or each retaining means (31,32) is associated with a respective said retracting means in the form of a piston (43) in a cylinder (44), means (47) being provided to supply gas to the cylinder when a rear impact is sensed to move the piston and thus to retract the retaining means.

6. A seat according to Claim 5 wherein the means to supply gas comprise a pyrotechnic charge (47) associated with a rear impact sensor (53), the arrangement being such that the pyrotechnic charge is ignited in response to a sensed rear impact.

## Patentansprüche

1. Ein Sitz (60) zur Verwendung in einem Fahrzeug, wobei der Sitz eine Rückenlehne mit einem Stützelement (62) aufweist, das so angeordnet ist, daß es den Rücken des Torsos einer auf dem Sitz befindlichen Person abstützt, wobei das Stützelement schwenkbar (64) mit dem Rest (61) des Sitzes verbunden ist, so daß der obere Teil des Stützelements nach hinten schwenken kann, wobei der Sitz eine Kopfstütze (63) beinhaltet, die an dem Stützelement gehalten ist, dadurch gekennzeichnet, daß Mittel (40, 41; 53) vorgesehen sind, um einen Heckaufprall auf ein Fahrzeug zu erfassen und dann zumindest dem oberen Teil des genannten Stützelements (62) zu ermöglichen, sich in einer nachgiebigen und anschließend nicht federnden Weise in einer vom Sitz rückwärts gerichteten Richtung zu bewegen, und Mittel (65-78) vorgesehen sind, um die Kopfstütze (63) relativ zu dem Stützelement (62) nach vorn zu bewegen, wenn sich der obere Teil des Stützelements nach hinten bewegt.

2. Sitz nach Anspruch 1, dadurch gekennzeichnet, daß die Mittel zum Erfassen eines Heckaufpralls einen Sensor (53), um eine Beschleunigung zu erfassen, die über einem vorbestimmten Grenzwert liegt, umfassen, wobei der Sensor dazu bestimmt ist, ein Mittel (32) freizugeben, das anfänglich das genannte Stützelement (62) in seiner Position hält.

3. Sitz nach Anspruch 1 oder 2, dadurch gekennzeichnet, daß das Stützelement (62) in einer Ausgangsposition durch eine Halteeinrichtung (31, 32) gehalten ist, wobei eine Rückzugseinrichtung (40, 41; 43, 44) vorgesehen ist, um die Halteeinrichtung ansprechend auf einen erfaßten Heckaufprall zurückzuziehen, um zu ermöglichen, daß das Stützelement (62) nach hinten schwenkt.

4. Sitz nach Anspruch 3, dadurch gekennzeichnet, daß die Halteeinrichtung einen oder mehrere Bolzen (31, 32) umfaßt, wobei Federmittel (35) vorgesehen sind, um den oder jeden Bolzen in eine zurückgezogene Position vorzuspannen, wobei ein über einen Totpunkt hinweg angeordnetes Gestänge (37, 39) zumindest einer trägen Masse (38, 40) zugeordnet ist, wobei das Gestänge den oder die Bolzen in der nicht zurückgezogenen Position hält, bis die träge Masse das über einen Totpunkt hinweg angeordnete Gestänge über die Totpunktstellung ansprechend auf einen erfaßten Heckaufprall bewegt.

5. Sitz nach Anspruch 3, dadurch gekennzeichnet, daß die oder jede Halteeinrichtung (31, 32) einer genannten Rückzugseinrichtung in Form eines Kolbens (43) in einem Zylinder (44) zugeordnet ist, wobei Mittel (47) zum Zuführen von Gas zu dem Zylinder vorgesehen sind, wenn ein Heckaufprall erfaßt wird, um den Kolben zu bewegen und somit die Halteeinrichtung zurückzuziehen.

6. Sitz nach Anspruch 5, dadurch gekennzeichnet, daß das Mittel zum Zuführen von Gas eine pyrotechnische Ladung (47) ist, die einem Heckaufprallsensor (53) zugeordnet ist, wobei die Anordnung so ist, daß die pyrotechnische Ladung ansprechend auf einen erfaßten Heckaufprall gezündet wird.

## Revendications

1. Siège (60) destiné à être utilisé dans un véhicule, le siège possédant un dossier comprenant un élément de support (62) situé pour supporter l'arrière du torse d'un occupant du siège, l'élément de support étant connecté à pivotement (64) à l'assise (61) du siège, de sorte que la partie supérieure de l'élément de support puisse pivoter vers l'arrière, le siège incorporant un appui-tête (63), l'appui-tête étant monté sur l'élément de support, caractérisé en ce que des moyens (40, 41; 53) sont prévus pour détecter un impact arrière sur un véhicule et pour permettre ensuite à au moins la partie supérieure dudit élément de support (62) de se déplacer en cédant et, ultérieurement, de manière non élastique, dans une direction vers l'arrière du siège, et des moyens (65-78) sont prévus pour déplacer l'appui-tête (63) vers l'avant par rapport à l'élément de support (62) alors que la partie supérieure de l'élément de support se déplace vers l'arrière.

2. Siège selon la revendication 1, dans lequel les moyens pour détecter un impact arrière comprennent un capteur (53) pour détecter une accélération excédant une limite prédéterminée, le capteur étant adapté pour libérer un moyen (32) qui retient initialement ledit élément de support (62) en position.

3. Siège selon la revendication 1 ou 2, dans lequel l'élément de support (62) est retenu dans une position initiale par des moyens de retenue (31, 32), des moyens d'escamotage (40, 41; 43, 44) étant prévus pour escamoter les moyens de retenue en réponse à un impact arrière détecté pour permettre à l'élément de support (62) de pivoter vers l'arrière.

4. Siège selon la revendication 3, dans lequel les moyens de retenue comprennent une ou plusieurs tiges (31, 32), un moyen de ressort (35) étant prévu pour pousser la ou chaque tige jusque dans une position escamotée, une liaison au-delà du point mort (37, 39) étant fournie associée à au moins une masse d'inertie (38, 40), la liaison maintenant la tige ou les tiges dans la position non escamotée jusqu'à ce que la masse d'inertie fasse passer la liaison au-delà du point mort par la position de point mort, en réponse à un impact arrière détecté.

5. Siège selon la revendication 3, dans lequel le ou chaque moyen de retenue (31, 32) est associé à undit moyen d'escamotage respectif sous la forme d'un piston (43) dans un cylindre (44), un moyen (47) étant prévu pour alimenter le cylindre en gaz lorsqu'un impact arrière est détecté, afin de déplacer le piston et donc d'escamoter les moyens de retenue.

6. Siège selon la revendication 5, dans lequel le moyen d'alimentation en gaz comprend une charge pyrotechnique (47) associée à un capteur (53) d'impact arrière, l'agencement étant tel que la charge pyrotechnique est amorcée en réponse à un impact arrière détecté.
